# EUROPEAN PATENT APPLICATION

(11) **EP 2 037 639 A2**
(43) Date of publication of application: **18.03.2009**
(21) Application number: 08161443.0
(22) Date of filing: 30.07.2008
(51) Int. Cl.: H04L 12/56

(54) **Devices and methods for local breakout in a gateway of an access service network**

(30) Priority: 13.09.2007 US 898585
(71) Applicant: Nokia Corporation, 02150 Espoo (FI)
(72) Inventor: Pandey, Ravi Shankar, 02430 Masala (FI); Pichna, Roman, 02620 Espoo (FI); Li, Zexian, 02280 Espoo (FI); Bachmutsky, Alexander, Sunnyvale, CA 94087 (US)
(74) Representative: TBK-Patent

(57) **Abstract**

In an embodiment, an apparatus is configured to receive traffic of different traffic types, and to route the different traffic types to different paths or networks, the different traffic types comprising internet service domain traffic and operator's service domain traffic. The apparatus may for example be a gateway of an access services network e.g. of worldwide interoperability of microwave access, WiMAX.

## Description

### Field of technology and background

The invention relates to methods and devices applicable in communication networks and may provide local breakout in communications networks. In accordance with one, more or all of the embodiments of the invention, a local breakout function or device can be implemented in a gateway such as an access service network gateway, ASN GW, e.g. of worldwide interoperability of microwave access, WiMAX.

Some WiMAX standardization is based on mobile internet protocol version 4 or 6, Mobile IPv4/IPv6, where user traffic goes via a home agent, HA, through a mobile IP, MIP, tunnel. According to WiMAX Forum standardization, all user traffic, Internet domain or operator's domain, will go through connectivity service network, CSN, home agent, HA. From an operator's point of view, user traffic can be divided in e.g. two categories such as Internet service domain and operator's service domain. Most of the Internet domain traffic may be assigned a best effort, BE, traffic class and may perhaps be charged with a flat rate monthly fee. The Internet domain traffic may for example include one or more of video on demand, GTalk, SKYPE, Internet browsing, peer to peer, any P2P, traffic and so on. Traffic to operator's domain, in the following also designated as operator services traffic or control traffic, may be mainly for operator specific services such as: multicast/broadcast service, Internet Protocol Television, IPTV, service, IP multimedia subsystem, IMS, push services, etc. An operator may provide differentiated quality of service, QoS, and charging to calculate the revenue for its services.

In accordance with one, more or all of the embodiments of the invention a routing of some traffic such as Internet traffic (e.g., best effort & flat rate) can be controlled so as to bypass a home agent. Hence, there is no consumption of large bandwidth by the home agent, also reducing dimensioning requirements of a home agent. A local breakout can be provided in a gateway, e.g. of an access service network, allowing to optimise the routing of data traffic or user traffic such as Internet data traffic.

Usually, most of Internet traffic (IP traffic) is generated when a mobile user is stationary. Further, most of Internet traffic usually does not need a proper handover for internet or internet protocol type of services because internet applications may be able to recover from packet loss and even from a change of IP addresses, e.g. if mapping in network address port translation, NAPT, expires.

Operators may prefer to have some level of service control to discriminate and control operator domain services for its own revenue generation.

According to an aspect of the present invention there is provided a system comprising a device as defined above.

In accordance with at least one or all of the embodiments of the invention, an apparatus is configured to receive traffic of different traffic types, and to route the different traffic types to different paths or networks so as to provide a local breakout function or device, the different traffic types comprising internet service domain traffic and operator's service domain traffic. The apparatus may e.g. be a gateway or a device, module or chip of a gateway or another device, an access service network gateway, a worldwide interoperability of microwave access, WiMAX gateway, and/or may comprise at least one of a switch configured to switch incoming traffic to internet service domain traffic path or operator's service domain traffic path, a data path function, a foreign agent, and a network address translation function or network address port translation function. The switch may e.g. be at least one of a layer 3 switch and a public or private switch, and/or may be provided between the data path function or a gateway input, and the foreign agent or other traffic tunnel end point.

In accordance with at least one or all of the embodiments of the invention, a method may comprise, receiving traffic of different traffic types, routing the different traffic types to different paths or networks so as to provide a local breakout, the different traffic types comprising internet service domain traffic and operator's service domain traffic.

Local breakout rules, e.g., detecting and switching rules, may e.g. be transferred between access service network gateways if a breakout point is re-anchored. Local breakout rules may be provisioned into access service network gateway with authorization or dynamically with policy control or using operation and maintenance provisioning.

A permission to allow local break-out can be provided by operation and maintenance, O&M, or can be sent to the ASN-GW with authorization or pushed dynamically.

In accordance with one, more or all of the embodiments of the invention, a computer program product may include a program comprising software code portions for performing, when the program is run on a processing device, any of the steps of the method mentioned above. A computer readable medium may store such a computer program product.

In accordance with at least one or all of the embodiments of the invention, an apparatus may comprise means for receiving traffic of different traffic types, and means for routing the different traffic types to different paths or networks, the different traffic types comprising internet service domain traffic and operator's service domain traffic.

According to a further aspect of the present invention there is provided a module including means for performing any of the steps of the methods as defined above.

### BRIEF DESCRIPTION OF THE DRAWINGS

Embodiments of the present invention are described below with reference to the accompanying drawings, wherein:
Fig. 1 is a basic diagram of an embodiment of a network reference architecture to which embodiments the present invention may be applied,
Fig. 2 is a block diagram of another embodiment of the present invention,
Fig. 3 is a block diagram showing an embodiment of a device and method according to an implementation of the present invention, and,
Fig. 4 shows a method in accordance with an embodiment of the invention.

### DESCRIPTION OF EMBODIMENTS

The present invention will be described herein below with reference to the accompanying drawings.

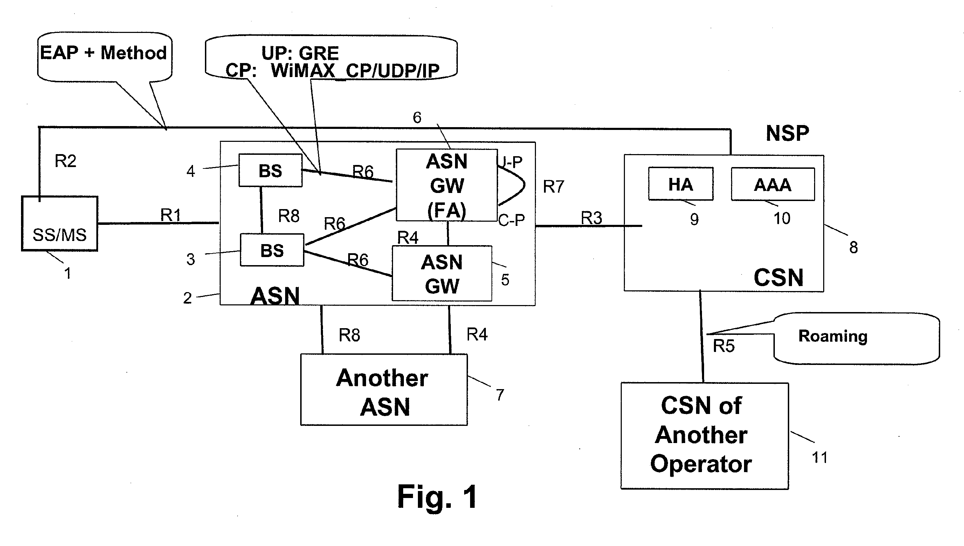

Fig. 1 shows an example embodiment of a WiMAX architecture which may incorporate features and embodiments of the invention. EAP, Extensible_Authentication_Protocol, is a protocol that serves as a vehicle to transport packets of authentication protocols. Those protocols are called EAP methods. Example of methods are listed e.g. in http://en.wikipedia.org/wiki/Extensible_Authentication_Protocol.

A mobile station MS 1 or subscriber station SS 1 may communicate with an access service network, ASN, 2 via an interface or reference point R1. The access service network 2 may include one or more base stations BS 3, 4 and one or more access service network gateways, ASN-GWs, 5, 6, e.g. gateway 6, which may contain foreign agent, FA, functionality. The access service network ASN 2 may communicate with another access service network 7 via interfaces (or reference points) R4, R8, and with a connectivity service network, CSN, 8 of a network service provider, NSP, via interface (reference point) R3. The connectivity service network, CSN, 8 of the network service provider, NSP, further includes a home agent, HA, 9 and a function, module, device for authentication, authorization and accounting, AAA 10. The connectivity service network, CSN, 8 of a network service provider, NSP, may communicate with another connectivity service network, CSN, 11 of another operator via interface or reference point R5.

The connecting lines in Fig. 1 represent NRM, Network Reference Model, reference points. Note: R7/R8 reference points are not normative in WiMAX Forum Release 1 standard and may also be omitted or replaced by other interactions or connections in the embodiments.

In roaming scenario R2 goes all the way to home network, as illustrated by the line R2 between the mobile station 1 and the connectivity service network 8.

Mobile IP and AAA, Authentication Authorization Accounting, may be handled via R3 between ASN 2 and CSN 8.

In the ASN 2 or for reference point R6, the user plane, UP, may use generic routing encapsulation protocol, GRE, and the control plane, CP, may use WiMAX control protocol on top of user datagram protocol, UDP, and internet protocol, IP.

The BS and MS/SS elements shown in the drawings may include functionality of 802.16d, 802.16e, 802.16g, as certified by WiMAX forum, WMF.

In WiMAX there are defined different types of basic network architectures and the detailed solutions in the different cases will be described in the following.

Embodiments of the present invention may be used with a WiMAX, Worldwide Interoperability for Microwave Access, structure. However, it is to be noted that the present invention is not limited to WiMAX and may also be used with any other types of access or transport technologies.

WiMAX architecture according to one or more of the embodiments may use Mobile IP, MIP, for CSN-anchored mobility across reference point R3. In accordance with one, more or all of the embodiments of the invention, terminal data user traffic, that is data traffic outgoing from the terminal 1, uses IP address that points to the MIP HA 9. Thus all incoming traffic is directed to HA 9, which intercepts it, wraps it into a tunnel and forwards to FA located in, e.g., ASN-GW 6. Mobile IP is also explained in "http://en.wikipedia.org/wiki/Mobile_IP".

There are two types of terminals: client MIP, CMIP, and proxy MIP PMIP. CMIP (Client MIP) terminal is aware of MIP because MIP Client is located in it. PMIP (proxy MIP) terminal is not aware of MIP because the MIP client is located in ASN-GW. In accordance with one, more or all of the embodiments of the invention, for many applications it is not necessary for user traffic to go via MIP Home Agent (HA) but it can break-out from ASN-GW 6. If all the user traffic is from/towards Internet, the only traffic that needs to go, in accordance with one, more or all of the embodiments of the invention, to MIP HA, is MIP control signalling or other control/configuration signalling between MS and CSN. Also, if operator is hosting some services behind HA, obviously the resulting traffic also will go, in accordance with one, more or all of the embodiments of the invention, via the MIP HA 9.

The outgoing traffic can break out from ASN-GW 6 and be routed directly to the corresponding host, bypassing the home agent 9. However, if the incoming traffic should also bypass HA 9, it should be addressed to an IP address that points towards ASN-GW 6. Therefore, ASN-GW has to perform network address and port translation, NAPT, between the address allocated to MIP by HA (or other network element) and the address that is used in the Internet to route the traffic for the terminal directly to ASN-GW. Network address translation is described e.g. in "http://en.wikipedia.org/wiki/ Network_address_translation", and port address translation in "http://en.wikipedia.org/wiki/Port_address_translation".

Some of the advantages of this and other embodiments are that the home agent may be dimensioned only for control signalling and e.g. possible operator services resulting in lower costs, speedy functioning and reliability of the MIP HAs.

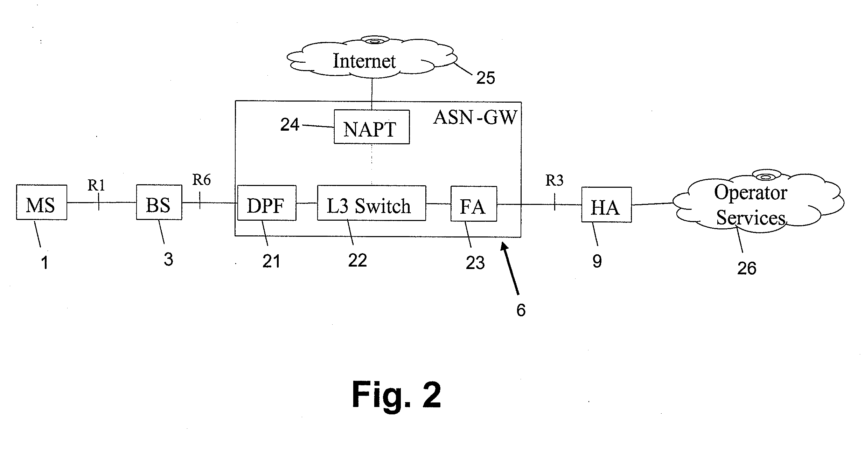

Fig. 2 shows an embodiment and details of the access service network gateway 6 according to an implementation.
The mobile station 1 may be connected to the base station 3 via reference point or interface R1. The base station 3 may be connected to the gateway 6 of the access services network via reference point or interface R6. The access services network gateway 6 provides connection or access to and/or from Internet 25 using data or IP traffic, and to the home agent 9 e.g. via reference point R3. The home agent 9 may provide access to e.g. operator services 26. Note that access provisioning via HA can be bi-directional, or only in one direction, e.g., downlink - from server to MS/SS.

In this embodiment, the gateway 6 comprises at least one of a data path function, DPF, 21, a switch 22, and in case local breakout is done in anchor ASN-GW, foreign agent, FA, 23, and a network address and port translation, NAPT, function or unit 24 for network address and/or port translation between internet addresses and network addresses/ports. The switch (unit or function) 22 may be a layer 3, L3, switch and may be implemented, in an embodiment, as a public/private destination IP address switch, e.g., simple IP routing functionality.

The connection between the switch 22 and the NAPT function or unit 24 optionally supports overlapping home IP addresses = tunneling needed for external NAPT.

The L3 switch 22 allows a local breakout which means that part or optionally all IP-based or data traffic such as all Internet traffic (e.g. best effort, BE) can breakout in ASN-GW 6 via switch 22 to or from NAPT 24 or internet 25. Operator services e.g. from services 26 may still be delivered or requested via HA 9 and therefore do not break out at switch 22. Note that no MIP HA is needed for PMIP terminals and then all traffic can break-out locally in ASN-GW.

ASN-GW 6 can switch all uplink Internet IP traffic (from MS) directly to the Internet. However, if the source address in outgoing IP packets uses IP address allocated from the addressing space of MIP HA, downlink traffic (towards MS) will always be routed from the server to MIP HA and only then be tunnelled towards MS via ASN-GW. This routing is called triangular routing. NAPT 24 can be an optional feature for ASN-GW 6 to prevent triangular routing for bypassing HA for downlink traffic. For roaming terminals the private same home address, HoA, can be allocated by two different home CSN networks. Similarly, an operator can choose to segment own network and reuse private addressing for terminals with HA in different segments. The NAPT functionality in ASN GW 6 can also support the use of overlapping home IP addresses, HoA. In case of external NAPT, tunnelling is needed between ASN-GW L3 Switch 22 and NAPT to map public and private destination address.

To accommodate overlapping home IP addresses between different terminals/operators, an external NAPT function uniquely maps a terminal to a (public) IP address and port. Therefore unique connections between ASN-GW and external NAPT function have to be setup, e.g., using L2 VLANs or L3 tunnels or routing traffic via separate NAPT boxes for different users using the same HoA. ASN-GW 6 has to assure that no two users using the same IP HoA will share the same, e.g., L2 VLAN tag and external NAPT function has to assure that no two packets with identical HoA and separate L2 VLAN tags or L3 tunnels are treated as originated by one node.

Even if the only service is Internet access and all traffic breaks out in ASN-GW 6, HA 9 is still needed for C-MIP MS IP configuration, thus HA 9 becomes C-Plane element used only at network entry and MIP registration renewal times.

The described embodiments increase the value added by ASN-GW 6, and move the GW functionality from HA 9 to ASN-GW 6. Hence the dimensioning requirements of MIP HA 9 are decreased.

This implementation embodiment removes R3 mobility management, MM, from user plane, U-Plane, for Internet traffic but preserves R3 MM for operator's (e.g. packet loss and address change-sensitive) services.

Internet applications typically recover from packet loss and even a change of IP addresses (if mapping in NAPT expires). The embodiments provide full R4 and R6 ASN mobility.

ASN Re-anchoring (R3 Mobility Management) is a routing optimization step, not a must for mobility, and may optionally be provided in one or more of the embodiments.

Further, the embodiments optionally provide full R3 mobility management for operator's service traffic. For Internet traffic R3 mobility implies change of NAPT, which is equivalent to expired NAPT mapping.

PMIP terminals may operate even without MIP which means change of IP address (CSN Anchor) with each re-anchoring.

Transfer of local breakout rules, e.g., detecting and switching rules, between ASN-GWs if the breakout point is re-anchored. These rules are provisioned into ASN-GW with authorization or dynamically with policy control or using O&M provisioning.

Context information of local breakout context is part of information stored for idle terminal in the network (e.g. in paging controller / location register). When a terminal transits into idle state relevant context is stored into location register/paging controller. The break out rules are optionally also included in this stored context.

In one simple embodiment, publicly routable IP addresses are transmitted in ASN-GW 6 with local breakout. For distinguishing within the switch for deciding on breakout, discrimination is based on rules: public-private addressing space or IP 5-tuple ranges (source IP address, destination IP address, protocol, source port, destination port) or a subset of it. The rules can be based also on other fields of the IP packet or higher protocols. Further, in this embodiment, operator domain addresses are fed into MIP tunnel. The data path function, DPF, feeds data to the foreign agent, FA, which is the entry point of the MIP tunnel. The switch or switch function is provided between the DP and FA functions. Thus it is the switch that switches data to FA or local breakout interface, or in principle also to other domains.

In the downlink, the terminal-bound traffic arriving at NAPT or FA is combined and fed to the correct DPF for the terminal.

L3 switch 22 does not do any packet inspection in some of the embodiments but may do so in other embodiments. In most cases, the switch 22 makes a check and routing decision to identify/distinguish between Internet traffic and operator traffic. The L3 switch 22 can be logically located between data path function (DPF) 21 and FA function. This arrangement will allow reusing existing DPF and FA functionalities to maximum extent.

On top of the break out rules also indication of local break out being allowed for a subscription, or for all users has to be present in ASN-GW. Permission to allow local break-out can be provided by operation and maintenance, O&M, or can be sent to the ASN-GW 6 with authorization.

The decision to allow local break-out for roaming users can be provided as follows. A permission of local break out can be signaled in an authorization message from a visited authentication, authorization and accounting server, V-AAA, to the ASN-GW 6. Alternatively, it can be also signaled from home AAA.

Breaks out are only allowed in HA 9 and never in ASN-GW 6 if roaming agreement does not allow it or break out is not supported in the visited domain.

A break out can take place in ASN-GW 6 if roaming agreement allows it, or if authorization from home AAA allows it.

Rules describing which flows are allowed or forced to break-out from ASN, e.g. from gateway 6 to NAPT 24 or Internet 25, can be pre-configured with O&M or be part of user specific profile arriving with authorization.

Information about local breakout permission and specific breakout rules can optionally also be signaled between ASN-GWs in case of R3 re-anchoring, e.g. in case of Mobile IP handover.

If break out at local ASN-GW is allowed and lawful intercept is requested local breakout in ASN-GW is performed only if ASN-GW supports lawful intercept functionality to prevent bypassing lawful intercept functionality in HA.

To accommodate overlapping home IP addresses between different terminals/operators, a NAPT like function is performed for break out traffic that uniquely maps IP flows of a terminal to a (public) IP address and port Terminal is identified by either or combination of HoA (if unique), MS MAC (L2) address, Data Path ID, subscription ID, Network Access Identifier NAI.

In the embodiment of Fig.2, the NAPT functionality is provided and executed in ASN-GW 6. If the NAPT functionality is provided externally, a MS-unique tunnel has to be used between ASN-GW 6 and an external network address translation, NAT, network element.

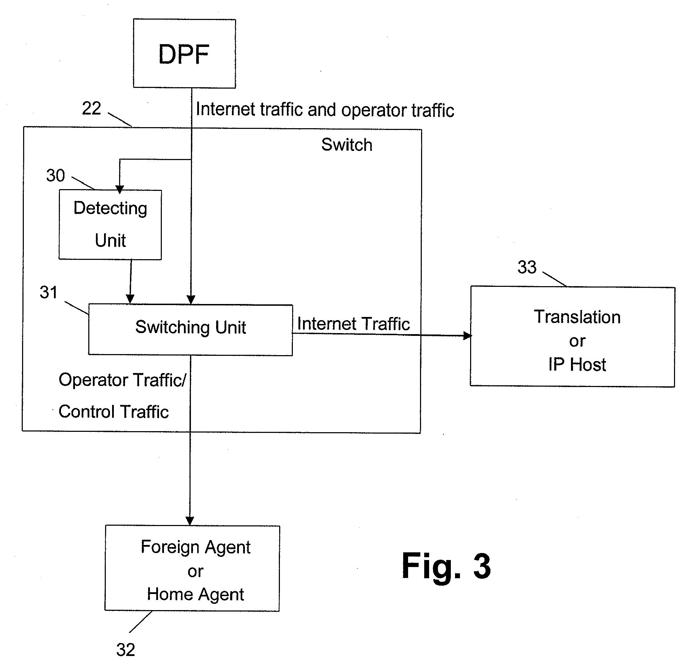

Fig. 3 shows an embodiment of switch 22 as provided in Fig. 2. The switch 22 provides switching in uplink direction. The switch 22 also works in the other direction as well. It combines the traffic destined for MS in the downlink direction.

The switch 22 is adapted to receive at an input combined Internet traffic and operator traffic which may e.g. be generated by MS 1. A detecting unit 30 of the switch 22 is able to receive and distinguish between the Internet traffic and the operator traffic, and is configured to control a switching unit 32 so as to divide the traffic into the Internet traffic which is supplied to a translation function or device 33 such as NAPT 24 or directly to the IP host indicated by the address when no translation is required, and into the operator traffic which is supplied to a foreign agent or home agent 32 which may correspond to the foreign agent 23 or the home agent 9 of Fig. 2.

In the downlink, towards the MS, the switch 22 functionality combines/aggregates relevant traffic flows towards the MS.

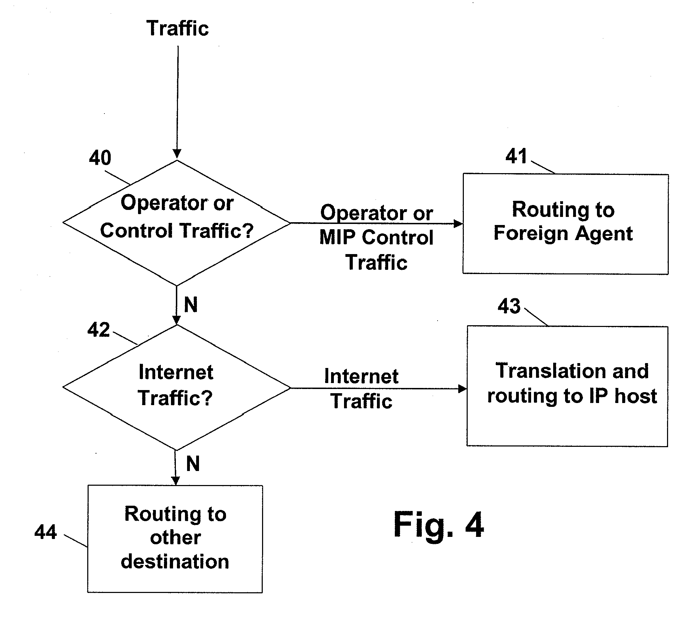

Fig. 4 shows a method in accordance with one, more or all of the embodiments of the invention.

When traffic arrives, a decision function or step 40 is executed for checking whether the traffic or traffic type is an operator traffic or control traffic such as mobile IP, MIP, control traffic. If so, a step or function 41 is executed in which the traffic is sent or routed to a foreign agent, e.g. foreign agent 9 of Fig. 1 or 23 of Fig. 2, or is directly routed to a home agent, e.g. home agent 9 of Fig. 1 or 2.

When the decision function or step 40 detects that the traffic is no operator traffic or control traffic, the traffic type is checked by a decision function or step 42 which checks whether the traffic or traffic type is a traffic for the internet domain or internet services domain. The decision function or step 42 may check whether the traffic is an IP-based traffic. If the function or step 42 detects that the traffic or traffic type is a traffic for the internet domain or internet services domain, the traffic is switched or forwarded to a step or function 43 in which the IP-based traffic is translated by a network address translation or network address port translation function, or may also be directly sent or routed, in case no address translation is needed or because of other reasons, to an IP host indicated by the address included in the traffic such as in IP packets of the IP-based traffic.

In case the traffic is neither of operator traffic type nor of IP-based traffic type, the traffic may be routed, in a step or function 44, to other destination as appropriate.

In other embodiments, the sequence of the steps of Fig. 4 and the other drawings may of course also be carried out simultaneously or in reverse or otherwise changed order.

Advantages of one or more of the embodiments include one or more of the following: a good and efficient or optimal routing for internet traffic from ASN gateway, GW, a reduction or incorporation of Mobile IP HA into the control plane element, C-Plane element, the home agent no longer needing to handle any, or at least less, user traffic in such a case. The logical and physical architecture for operator's services can be preserved. An operator (business case) can provide e.g. flat-rate and best effort quality of service, BE QoS, Internet service to users. A service control for third party applications is available (restriction of available resource per aggregation point). Even if R3 Mobility management should not work for internet traffic because of local breakout, mobility is provided in ASN (R4 and R6) and in addition Internet applications typically recover from the change of IP addresses.

In view of the foregoing description it is evident to a person skilled in the art that various modifications may be made within the scope of the invention.

For the purpose of the present invention described herein above, it is noted that a mobile terminal or station may for example be any kind of a wireless communication device, e.g. personal computers, mobile phones or the like, irrespective of a specific standard to which these conform. Method steps likely to be implemented by hardware or as software code portions and being run using a processor at one of the devices, e.g. mobile station or network element, may be software code independent and can be specified using any programming language as long as the functionality defined by the method steps is preserved.

Generally, any method step is suitable to be implemented as software or by hardware without changing the idea of the present invention in terms of the functionality implemented. Method steps and/or devices likely to be implemented as hardware components at one of the devices, e.g. network element or mobile station are hardware independent and can be implemented using any hardware technology or any hybrids of these, such as MOS (Metal Oxide Semiconductor), CMOS (Complementary MOS), using for example ASIC (Application Specific Integrated Circuit) components or DSP (Digital Signal Processor) components, as an example. Devices can be implemented as individual devices, or may be implemented in a distributed fashion throughout the system, as long as the functionality of the device/system is preserved.

Respective elements, e.g. deciding unit, switching unit, etc. according to certain embodiments can be implemented by any known means, either in hardware (DSP, microprocessor, microcontroller, ASIC, FPGA, etc) and/or software, respectively, as long as it is adapted to perform the described functions of the respective parts.

The functions and structures of the embodiments shown and described can thus be implemented by various means, such as hardware, firmware, and/or software including one or more computer program instructions. For example, one or more of the procedures described above may be embodied by computer program instructions which may be stored by a memory device of the gateway or other device and may be executed by a processor in the device.

The computer program instructions may be stored in or loaded onto a computer or other programmable apparatus or hardware to produce a device such as a gateway or a switch that the instructions which execute on the computer or other programmable apparatus create means for implementing the functions described. The computer program instructions may also be stored in a computer-readable memory. The computer program instructions may also be loaded onto a computer or other programmable apparatus to cause steps to be performed in the device or computer. A computer program product may include a computer-readable storage medium which may e.g. a non-volatile memory. Computer-readable program code portions may be embodied in the computer-readable storage medium so as to carry out the functions or steps of embodiments of the invention

Many modifications and other embodiments of the inventions set forth herein will come to mind to one skilled in the art. The invention is not limited to the specific embodiments disclosed. Modifications and other embodiments are also included within the scope of the claims. Specific terms used hereinabove are to be understood in a generic and descriptive sense only without limiting the scope.

## Claims

1. An apparatus configured to receive traffic of different traffic types, and to route the different traffic types to different paths or networks so as to provide a local breakout function or device, the different traffic types comprising internet service domain traffic and operator's service domain traffic.

2. The apparatus according to claim 1, wherein the apparatus is a gateway or a device, module or chip of a gateway or another device.

3. The apparatus according to claim 2, wherein the gateway is an access service network gateway.

4. The apparatus according to claim 2, wherein the gateway is a worldwide interoperability of microwave access, WiMAX gateway.

5. The apparatus according to claim 2, wherein the gateway comprises at least one of a switch configured to switch incoming traffic to internet service domain traffic path or operator's service domain traffic path, a data path function, a foreign agent, and a network address translation function or network address port translation function.

6. The apparatus according to claim 5, wherein the switch is at least one of a layer 3 switch and a public or private switch.

7. The apparatus according to claim 5, wherein the switch is provided between the data path function or a gateway input, and the foreign agent or other traffic tunnel end point.

8. A method comprising, receiving traffic of different traffic types, routing the different traffic types to different paths or networks so as to provide a local breakout, the different traffic types comprising internet service domain traffic and operator's service domain traffic.

9. Method according to claim 8, wherein local breakout rules, e.g., detecting and switching rules, are transferred between access service network gateways if a breakout point is re-anchored.

10. Method according to claim 8, wherein local breakout rules are provisioned into access service network gateway with authorization or dynamically with policy control or using operation and maintenance provisioning.

11. Method according to claim 8, wherein a permission to allow local break-out can be provided by operation and maintenance, O&M, or can be sent to the ASN-GW 6 with authorization or pushed dynamically.

12. A computer program product including a program comprising software code portions for performing, when the program is run on a processing device, any of the steps of the method according to claim 8.

13. A computer readable medium storing a computer program product according to claim 12.

14. Apparatus comprising means for receiving traffic of different traffic types, and means for routing the different traffic types to different paths or networks, the different traffic types comprising internet service domain traffic and operator's service domain traffic.
